Europäisches Patentamt

European Patent Office

Office européen des brevets

(19)

(11) Numéro de publication: **0 219 370 B1**

# FASCICULE DE BREVET EUROPEEN

(12)

(45) Date de publication du fascicule du brevet:
**27.12.90**

(51) Int. Cl.⁵: **G11B 5/127,** G11B 5/255
// G11B5/31

(21) Numéro de dépôt: **86401908.8**

(22) Date de dépôt: **29.08.86**

(54) Procédé de réalisation d'une tête magnétique horizontale enterrée et tête magnétique obtenue par ce procédé.

(30) Priorité: **04.09.85 FR 8513112**

(43) Date de publication de la demande:
**22.04.87 Bulletin 87/17**

(45) Mention de la délivrance du brevet:
**27.12.90 Bulletin 90/52**

(84) Etats contractants désignés:
**DE GB IT NL**

(56) Documents cités:
**EP-A- 0 152 326**

**PATENTS ABSTRACTS OF JAPAN,
vol. 5, no. 138 (P-78)[810], 2 Septembre 1981;
JP-A-56 74 812 (NIPPON DENSHIN DENWA
KOSHA) 20-6-1981
PATENTS ABSTRACTS OF JAPAN,
vol. 8, no. 72 (P-265)[1509], Avril 1984, page 106 P 265; &
JP-A-58 218 018 (NIPPON DENKI K.K.) 19-12-1983
PATENTS ABSTRACTS OF JAPAN,
vol. 8, no. 23 (P-251)[1460], 31 Janvier 1984, page 110 P 251; & JP-A-58 179 921 (NIPPON
DENKI K.K.) 21-10-1983**

(73) Titulaire: **COMMISSARIAT A L'ENERGIE ATOMIQUE,
29-31, rue de la Fédération, F-75015 Paris(FR)**

(72) Inventeur: **Migny, Philippe, 34, rue Louis Armand,
F-38170 Seyssins(FR)**

(74) Mandataire: **Mongrédien, André et al, c/o
BREVATOME 25, rue de Ponthieu, F-75008 Paris(FR)**

## Description

La présente invention a pour objet un procédé de réalisation d'une tête magnétique horizontale enterrée et une tête magnétique obtenue par ce procédé. L'invention trouve des applications dans les équipements d'enregistrement magnétique tels que les mémoires d'ordinateur et les matériels audio et vidéo.

Le procédé objet de la présente invention permet d'obtenir des têtes du type couches minces à structure horizontale pour l'écriture et la lecture d'informations sur un support magnétique.

Au moins deux types de têtes magnétiques peuvent être obtenus à partir de ce procédé :
- un premier type correspondant aux têtes magnétiques dites "à entrefer", plus spécialement adaptées à l'enregistrement longitudinal,
- un second type correspondant aux têtes dites "à pièce polaire principale", plus spécialement adaptées à l'enregistrement perpendiculaire.

Des têtes magnétiques à structure horizontale de chacun de ces deux types ont déjà été décrites par le passé, notamment :
- dans le brevet européen n° 85/400.136.9 décrivant un procédé de réalisation d'une tête magnétique à entrefer pour enregistrement longitudinal,
- dans le brevet européen n° 85/400.135.1 décrivant un procédé de fabrication d'une tête magnétique pour enregistrement perpendiculaire.

Dans ces deux procédés, la réalisation de la tête magnétique commence avec le dépôt d'une couche magnétique sur un substrat. Cette couche magnétique est localement gravée pour y former un sillon (ou tranchée) dans lequel est réalisé un bobinage conducteur ; ensuite, ce bobinage est isolé par dépôt d'une couche de matériau isolant.

Suivant le type de tête recherché, sont alors réalisées un certain nombre d'opérations permettant d'arriver au dispositif à enregistrement longitudinal ou à enregistrement perpendiculaire, selon le cas.

Ces procédés de fabrication connus présentent au moins deux inconvénients. Tout d'abord la gravure de la couche magnétique pour la formation du sillon, est partielle, c'est-à-dire qu'elle n'affecte pas l'épaisseur du matériau dans sa totalité. Il faut donc imaginer, quel que soit le mode de gravure, un moyen pour contrôler efficacement la profondeur du sillon durant l'opération de gravure, ce qui peut s'avérer très difficile compte tenu des dimensions du dispositif (quelques micromètres).

Une seconde difficulté dans les procédés de l'art antérieur réside dans le fait que la structure finale se trouve "en relief" par rapport au support, ce qui nécessite une étape ultérieure de planarisation pour satisfaire les conditions nécessaires au "vol" des têtes.

La présente invention remédie à ces deux inconvénients en remplaçant la gravure de la couche magnétique par une gravure préalable du support suivie d'un dépôt dans la partie gravée.

Avec l'invention, il est possible de réaliser des dispositifs entièrement "enterrés" dans leur support et dont seule la partie utile (pièces polaires) vient affleurer le "plan de vol" pour assurer le fonctionnement.

La description qui va suivre se réfère aux dessins annexés, sur lesquels :

- les figures 1a et 1b montrent en coupe deux variantes de caisson réalisé dans un substrat,
- les figures 2a et 2b montrent ces mêmes caissons en vue de dessus,
- les figures 3a et 3b montrent, en coupe, la structure obtenue après dépôt d'une couche magnétique,
- les figures 4a, 4b montrent le dispositif après réalisation du bobinage conducteur,
- les figures 5a, 5b, 5c montrent une tête d'écriture pour enregistrement horizontal (5a) et vertical (5b, 5c),
- les figures 6a et 6b représentent en coupe le dispositif final en cours d'écriture et de lecture.

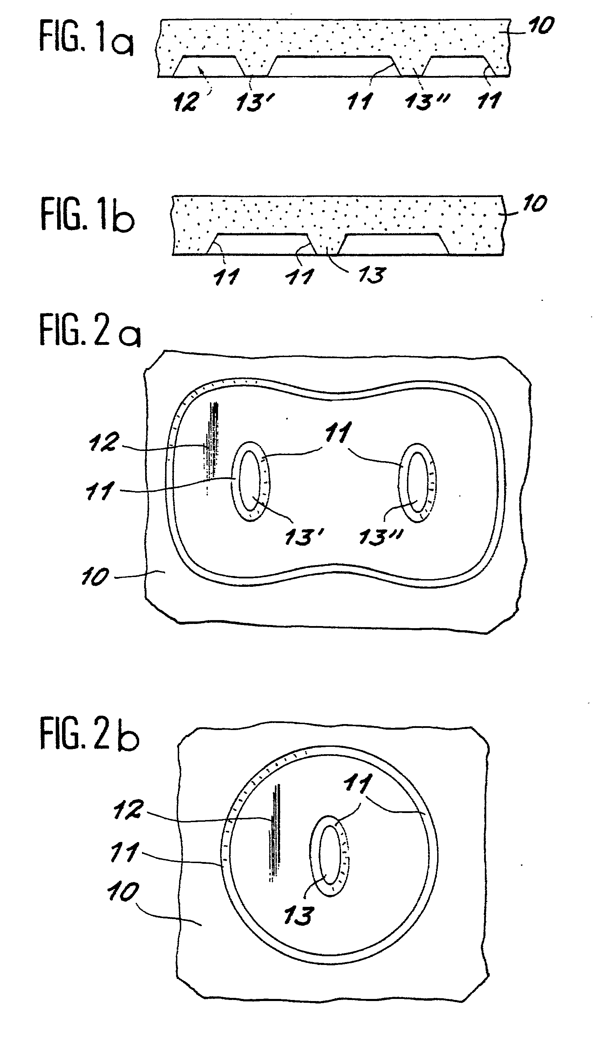

Sur les figures 1a et 1b, le support 10 (ou substrat) peut être soit une céramique, soit un diélectrique, soit une plaquette de silicium du type de celles qui sont utilisées dans la technologie des circuits intégrés semiconducteurs. Le support 10 est gravé pour donner naissance à un caisson 12 en forme de "8" (figures 1a et 2a) ou de "0" (figures 1b et 2b), suivant le type de structure recherché. Cette gravure peut être réalisée de différentes manières suivant la nature du support. Il peut s'agir de gravure chimique, de gravure ionique réactive, d'usinage ionique, voire même d'usinage au laser. Les deux premières techniques semblent plus attractives par le fait qu'elles permettent de contrôler et de faire varier la pente du flanc de gravure 11. Une pente douce peut être utile pour assurer une meilleure continuité de la couche magnétique déposée par la suite. Les bossages laissés à l'intérieur des caissons peuvent éventuellement être ajustés en hauteur (h) afin de parfaire l'enfouissement du dispositif. La profondeur du caisson est comprise entre 2 et 10 µm environ.

Les figures 2a et 2b montrent les caissons en vue de dessus. Dans le premier cas, le caisson est ovale et comprend deux bossages 13' et 13" symétriques qui subsistent au voisinage des deux extrémités. Dans le second cas le caisson présente une forme circulaire avec un seul bossage 13 au centre.

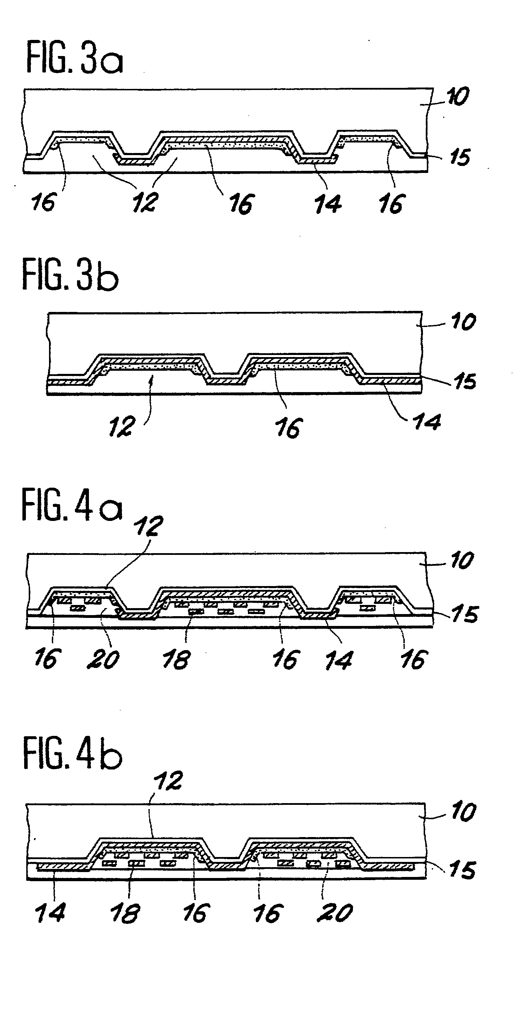

Les figures 3a et 3b montrent les allures possibles de la première couche de matériau magnétique 14 après dépôt puis gravure. Suivant la nature du support, une couche de diélectrique isolant 15 peut éventuellement avoir été déposée préalablement.

On dépose ensuite sur la couche de matériau magnétique une couche diélectrique isolante 16. On forme ensuite un bobinage conducteur autour des bossages. Pour cela, et comme décrit dans les deux documents cités plus haut, on dépose un isolant dans la tranchée, on grave cet isolant sous forme de sillons et on dépose au fond de ces sillons et sur l'isolant qui subsiste une couche métallique. On obtient ainsi un double enroulement aux contours complémentaires. C'est ce qui est représenté sur les figures 4a et 4b où le bobinage conducteur porte la référence 18.

Un isolant 20 de type silice ou résine polymérisée viendra ensuite combler les parties en creux.

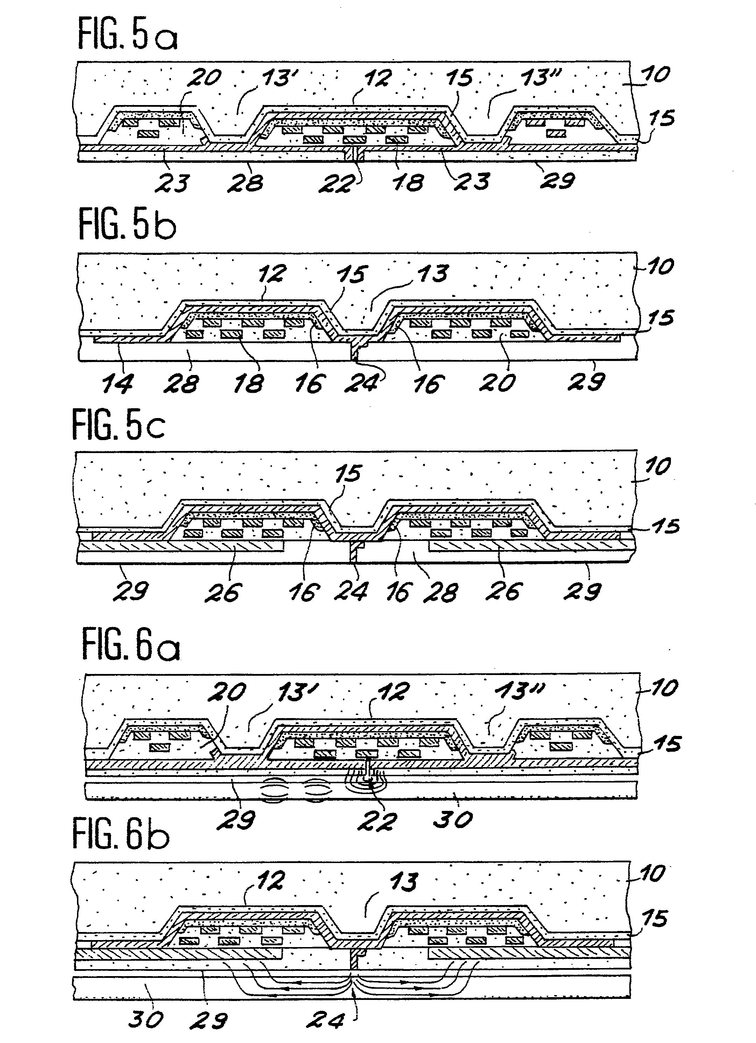

Suivant le type de tête recherché, se succèdent alors diverses étapes déjà connues de l'homme de l'art pour aboutir aux dispositifs des figures 5a et 5b. Sur la première on retrouve une structure horizontale à entrefer 22, cet entrefer étant constitué par un espaceur amagnétique inséré dans une seconde couche magnétique 23 ; une telle tête conduit à un enregistrement longitudinal. En figure 5b est représentée une tête à pièce polaire principale 24 en contact avec la couche magnétique 14 au niveau du bossage central 13 ; une telle tête conduit à un enregistrement perpendiculaire. La figure 5c représente une variante de tête à enregistrement perpendiculaire dans laquelle une couche magnétique 26 facilite la fermeture des lignes de flux magnétique, en abaissant la réluctance du dispositif. Ceci se traduit par un accroissement des performances de ce type de tête.

Dans tous les cas la couche 28 est une couche isolante de protection. Elle définit le plan de vol 29 de la tête.

Les figures 6a et 6b représentent les dispositif obtenus finalement en situation de lecture ou d'écriture. Les flèches symbolisent la circulation des lignes de flux magnétique à l'écriture sur un support magnétique 30 en déplacement relatif par rapport au plan de vol 29.

## Revendications

1. Procédé de réalisation d'une tête magnétique à structure horizontale pour un enregistrement vertical ou horizontal, procédé dans lequel, dans une tranchée formée par une couche magnétique (14) déposée sur un substrat (10), on dépose un bobinage conducteur (18), puis on isole ce bobinage par une couche isolante (20) et on dépose sur l'ensemble soit une pièce polaire verticale (24) reliée à la couche magnétique (14) dans le cas d'un enregistrement de type vertical, soit un espaceur amagnétique (22) dans une seconde couche magnétique (23) dans le cas d'un enregistrement de type horizontal, ce procédé étant caractérisé par le fait que, pour obtenir la couche magnétique présentant la forme de tranchée on part d'un support isolant (10), on grave ce support pour lui donner une forme de caisson (12) avec un ou des bossages (13, 13', 13") à l'intérieur, et on dépose une couche de matériau magnétique (14) dans le fond de ce caisson et sur les bossages, la structure finale obtenue étant ainsi enterrée dans le substrat (10).

2. Procédé selon la revendication 1, caractérisé par le fait que le caisson (12) présente une forme allongée avec deux bossages symétriques (13', 13") au voisinage de ses deux extrémités.

3. Procédé selon la revendication 1, caractérisé par le fait que le caisson (12) présente une forme circulaire avec un bossage (13) au centre.

4. Procédé selon la revendication 1, caractérisé par le fait que les bords (11) du caisson (12) et des bossages (13, 13', 13") sont inclinés par rapport à la verticale.

5. Procédé selon la revendication 1, caractérisé par le fait que les bossages (13, 13', 13") ont une hauteur inférieure à la profondeur du caisson, cette hauteur étant ajustée pour permettre un enfouissement approprié des couches déposées ultérieurement.

6. Procédé selon la revendication 1, caractérisé par le fait que l'on dépose une couche de matériau électriquement isolant (15) sur la paroi du caisson (12) préalablement au dépôt de la couche magnétique (14).

7. Tête magnétique à structure horizontale obtenue par le procédé de la revendication 1, cette tête étant destinée à un enregistrement de type vertical ou horizontal et comprenant un substrat (10) avec une couche magnétique présentant la forme d'une tranchée, un bobinage conducteur (18) déposé dans la tranchée, soit une pièce polaire verticale (24) dans une couche amagnétique (28), dans le cas d'un enregistrement de type vertical, soit un espaceur amagnétique (22) dans une seconde couche magnétique (23) dans le cas d'un enregistrement horizontal, cette tête étant caractérisée par le fait que le substrat (10) est creusé sous forme de caisson (12) avec un ou des bossages (13, 13', 13") et que la couche magnétique (14) est déposée au fond de ce caisson (12) et sur les bossages (13, 13', 13").

8. Tête magnétique selon la revendication 7, caractérisée par le fait que le caisson (12) a une profondeur comprise entre 2 et 10 μm.

## Claims

1. Process for producing a magnetic head of horizontal structure for vertical or horizontal recording, in which process a conductive winding (18) is deposited in a trench formed by a magnetic layer (14) deposited on a substrate (10), this winding is then insulated by means of an insulating layer (20), and deposited on the assembly as a whole is either a vertical pole piece (24) connected to the magnetic layer (14), for a recording of the vertical type, or a non-magnetic spacer (32) in a second magnetic layer (23), for a recording of the horizontal type, this process being characterized in that, to obtain the magnetic layer having the form of a trench, an insulating support (10) is taken as a starting point, this support is engraved to give it a caisson shape (12) with one or more bosses (13, 13', 13") on the inside, and a layer of magnetic material (14) is deposited in the bottom of this caisson and on the bosses, the final structure obtained being thereby buried in the substrate (10).

2. Process according to Claim 1, characterized in that the caisson (12) has an elongate shape with two symmetrical bosses (13', 13") in the vicinity of its two ends.

3. Process according to Claim 1, characterized in that the caisson (12) has a circular shape with a boss (13) at the centre.

4. Process according to Claim 1, characterized in that the edges (11) of the caisson (12) and of the bosses (13, 13', 13") are inclined relative to the vertical.

5. Process according to Claim 1, characterised in that the bosses (13, 13', 13") have a height smaller than the depth of the caisson, this height being set to allow a suitable burial of the layers subsequently deposited.

6. Process according to Claim 1, characterized in that a layer of electrically insulating material (15) is deposited on the wall of the caisson (12) prior to the deposition of the magnetic layer (14).

7. Magnetic head of horizontal structure obtained by means of the process of Claim 1, this head being intended for a recording of the vertical or horizontal type and comprising a substrate (10) with a magnetic layer having the form of a trench, a conductive winding (18) deposited in the trench and either a vertical pole piece (24) in a non-magnetic layer (28), for a recording of the vertical type, or a non-magnetic spacer (22) in a second magnetic layer (23), for horizontal recording, this head being characterized in that the substrate (10) is recessed in the form of a caisson (12) with one or more bosses (13, 13', 13"), and in that the magnetic layer (14) is deposited at the bottom of this caisson (12) and on the bosses (13, 13', 13").

8. Magnetic head according to Claim 7, characterized in that the caisson (12) has a depth of between 2 and 10 µm.

**Patentansprüche**

1. Verfahren zur Herstellung eines Magnetkopfes mit horizontaler Struktur für eine vertikale oder horizontale Aufnahme, wobei man bei diesem Verfahren in einen von einer auf einem Substrat (10) abgeschiedenen magnetischen Schicht (14) eine leitende Spule (18) abscheidet, dann diese Spule mit einer Isolierschicht (20) isoliert und auf die Anordnung entweder ein vertikales Polstück (24), das für den Fall einer Aufnahme der vertikalen Art mit der magnetischen Schicht (14) verbunden ist, oder ein unmagnetisches Abstandsstück (22) in einer zweiten magnetischen Schicht für den Fall einer Aufnahme der horizontalen Art abscheidet, wobei das Verfahren gekennzeichnet ist durch die Tatsache, daß man zum Erhalten der magnetischen Schicht in der Form eines Grabens von einem isolierenden Träger (10) ausgeht, man diesen Träger ätzt, um ihm eine Wannenform (12) mit ein oder mehreren Einsenkungen (13, 13', 13") im Innern zu geben, und man eine Schicht (14) aus magnetischem Material auf den Boden dieser Wanne und auf die Einsenkungen abscheidet, wobei die endgültig erhaltene Struktur so in dem Substrat (10) vergraben ist.

2. Verfahren nach Anspruch 1, gekennzeichnet durch die Tatsache, daß die Wanne (12) eine längliche Form mit zwei symmetrischen Einsenkungen (13', 13") in der Nähe ihrer beiden Enden aufweist.

2. Verfahren nach Anspruch 1, gekennzeichnet durch die Tatsache, daß die Wanne (12) eine runde Form mit einer zentralen Einsenkung (13) aufweist.

4. Verfahren nach Anspruch 1, gekennzeichnet durch die Tatsache, daß die Ränder (11) der Wanne und der Einsenkungen (13, 13', 13") zur vertikalen geneigt sind.

5. Verfahren nach Anspruch 1, gekennzeichnet durch die Tatsache, daß die Einsenkungen (13, 13', 13") eine geringere Höhe als die Tiefe der Wanne besitzen, wobei diese Höhe so angepaßt ist, daß ein geeignetes Vergraben der später abgeschiedenen Schichten ermöglicht wird.

6. Verfahren nach Anspruch 1, gekennzeichnet durch die Tatsache, daß man eine Schicht (15) aus elektrisch isolierendem Material vor dem Abscheiden der magnetischen Schicht (14) auf die Wand der Wanne (12) abscheidet.

7. Magnetkopf mit horizontaler Struktur, wie er durch das Verfahren nach Anspruch 1 erhalten wird, wobei dieser Kopf für eine Aufnahme der vertikalen oder horizontalen Art bestimmt ist und aufweist: ein Substrat (10) mit einer magnetischen Schicht in der Form eines Grabens, eine leitende Spule (18), die in dem Graben abgeschieden ist, entweder ein vertikales Polstück (24) in einer unmagnetischen Schicht (28) für den Fall einer Aufnahme der vertikalen Art oder ein unmagnetisches Abstandsstück (22) in einer zweiten magnetischen Schicht (23) für den Fall einer horizontalen Aufnahme, wobei dieser Kopf gekennzeichnet ist durch die Tatsache, daß das Substrat (10) in der Form einer Wanne (12) mit einer oder mehreren Einsenkungen (13, 13', 13") vertieft ist und daß die magnetische Schicht (14) auf dem Boden der Wanne (12) und der Einsenkungen (13, 13', 13") abgeschieden ist.

8. Magnetkopf nach Anspruch 7, gekennzeichnet durch die Tatsache, daß die Wanne eine Tiefe von zwischen 2 und 10 µm besitzt.

FIG. 1a

FIG. 1b

FIG. 2 a

FIG. 2 b

FIG. 3a

FIG. 3b

FIG. 4a

FIG. 4b

FIG. 5a

FIG. 5b

FIG. 5c

FIG. 6a

FIG. 6b